# EUROPÄISCHE PATENTSCHRIFT

(11) **EP 0 460 398 B1**
(45) Veröffentlichungstag und Bekanntmachung des Hinweises auf die Patenterteilung: **18.01.1995**
(21) Anmeldenummer: 91107117.3
(22) Anmeldetag: 02.05.1991
(51) Int. Cl.: H04J 14/08, H04B 10/20, H04J 3/06

(54) **Passives optisches Telekommunikationssystem**
Passive optical telecommunication system
Système de télécommunication optique passif

(30) Priorität: 04.05.1990 DE 4014396; 21.05.1990 DE 4016359
(43) Veröffentlichungstag der Anmeldung: 11.12.1991
(73) Patentinhaber: SIEMENS AKTIENGESELLSCHAFT, 80333 München (DE)
(72) Erfinder: Reimann, Udo, Dipl.-Ing., W-8000 München 71 (DE)

(56) Entgegenhaltungen:
- WO-A-88/05233
- WO-A-89/09518

## Beschreibung

Neuere Entwicklungen der Fernmeldetechnik führen zu diensteintegrierenden Digitalnetzen (ISDN), die in der Ebene der Teilnehmeranschlußleitungen eine Sternstruktur von Lichtwellenleitern aufweisen; solche mit Lichtwellenleitern ausgestattete diensteintegrierende Digitalnetze (ISDN) sind grundsätzlich für Schmalband- und Breitband-Dienste geeignet (DE-PS 24 21 002).

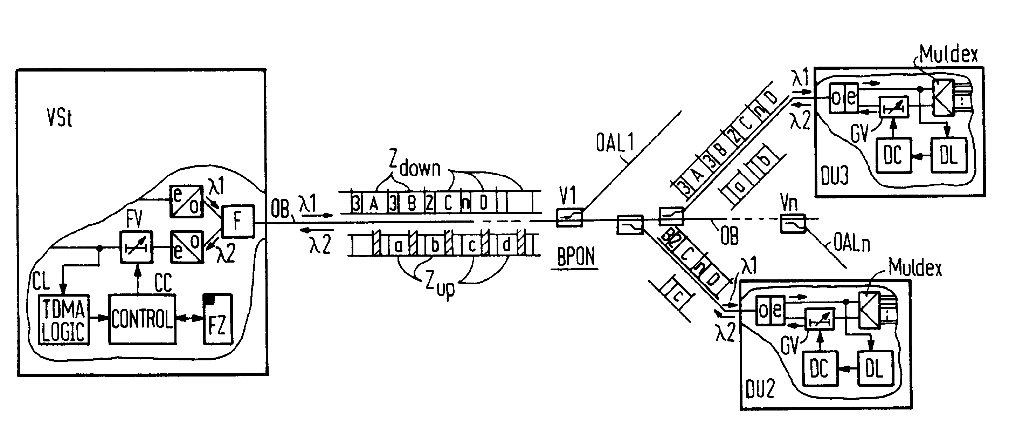

In einem reinen Sternnetz von Lichtwellenleiter-Teilnehmeranschlußleitungen ist, sofern man nicht elektrische Vorfeldeinrichtungen vorsieht, für jeden Teilnehmer eine teilnehmerindividuelle, zwischen Teilnehmerstelle und Vermittlungsstelle verlaufende Lichtwellenleiter-Teilnehmeranschlußleitung vorgesehen. Der mit teilnehmerindividuell zwischen Teilnehmerstelle und Vermittlungsstelle verlaufenden LWL-Teilnehmeranschlußleitungen verbundene Aufwand lässt sich verringern durch (topologisch ggf. als Sternnetz erscheinende) Lichtwellenleiter-Busnetze, wobei jeweils eine Mehrzahl von dezentralen Einrichtungen - z.B. teilnehmerstellenindividuelle oder jeweils einer Mehrzahl von Teilnehmerstellen gemeinsame, direkt beim Teilnehmer oder auch davon abgesetzt im Straßenvorfeld befindliche Netzabschlußeinrichtungen (Network Terminations) - jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß der Vermittlungsstelle über einen Lichtwellenleiter-Bus verbunden ist (siehe z.B. ISSLS′88, Conf.Papers 9.4.1...5; Br.Telecom Technol.J. 7(1989)2, 100...113, Fig.5); WO-Al-88/05233; WO-Al-89/09518).

In einem solchen passiven optischen Telekommunikationssystem, in dem jeweils eine Mehrzahl von dezentralen Einrichtungen |Distant Units| jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß der Vermittlungsstelle über einen Lichtwellenleiter-Bus verbunden ist, kann die Signalübertragung von der Vermittlungsstelle aus zu den dezentralen Einrichtungen hin kontinuierlich in einem TDM-Burststrom vor sich gehen, aus dem jede dezentrale Einrichtung nur diejenigen Bursts aufnimmt, die in ebendieser dezentralen Einrichtung zugeordneten Zeitkanälen übertragen werden, während die Signalübertragung von den dezentralen Einrichtungen aus zur Vermittlungsstelle hin in einem TDMA-Verfahren vor sich geht, demzufolge eine dezentrale Einrichtung ihre Bursts mit Hilfe einer von der Vermittlungsstelle her einrichtungsindividuell eingestellten Verzögerungseinrichtung synchronisiert in einem für diese dezentrale Einrichtung reservierten Zeitkanal auszusenden vermag (siehe ISSLS′88 a.a.O., S.9.4.2; WO 88/09093). Dazu ist es bekannt, daß die Vermittlungsstelle periodisch nach Maßgabe der Schleifenlaufzeit zwischen dezentraler Einrichtung und Vermittlung eine programmierbare digitale Verzögerungseinrichtung in der dezentralen Einrichtung so einstellt, daß die Schleifenlaufzeit einen vorgegebenen Wert erhält, bei dem die von der dezentralen Einrichtung ausgesendeten Bursts gerade in dem für diese dezentrale Einrichtung reservierten Zeitkanal liegen (WO-Al-88/05233; WO-Al-89/09518), wobei die Einstellung in zwei Stufen vor sich gehen kann: Zunächst wird eine Grobverzögerung mit einer Genauigkeit von ± 1 bit (50 ns) eingestellt, und danach folgt eine Feinverzögerung mit einer Genauigkeit von ±¹/₁₀ bit (siehe Br. Telecom Technolog. J. a.a.O., S. 100 und 108).

Eine in den dezentralen Einrichtungen zusätzlich zur Grobverzögerung durchgeführte Feinverzögerung - beispielsweise mit Hilfe einer einstellbaren analogen Verzögerungsleitung - ist mit einem entsprechenden schaltungstechnischen Aufwand verbunden, den zu vermeiden die Erfindung nun einen Weg zeigt.

Die Erfindung betrifft ein passives optisches Telekommunikationssystem, in dem jeweils eine Mehrzahl von dezentralen Einrichtungen |Distant Units| jeweils über eine eigene Lichtwellenleiter-Anschlußleitung mit einem optischen Verzweiger verbunden ist, der direkt oder über wenigstens einen weiteren optischen Verzweigermit einem gemeinsamen Lichtwellenleiteranschluß der Vermittlungsstelle über einen Lichtwellenleiter-Bus verbunden ist, wobei die Signalübertragung von der Vermittlungsstelle aus zu den dezentralen Einrichtungen hin in einem Burststrom vor sich geht, aus dem jede dezentrale Einrichtung nur die für ebendiese dezentrale Einrichtung bestimmten Bursts aufnimmt, und wobei die Signalübertragung von den dezentralen Einrichtungen aus zur Vermittlungsstelle hin in einem TDMA-Verfahren vor sich geht, demzufolge eine dezentrale Einrichtung jeden Burst mit Hilfe einer von der Vermittlungsstelle her einrichtungsindividuell eingestellten Verzögerungseinrichtung sychronisiert aussendet; dieses Telekommunikationssystem ist erfindungsgemäß dadurch gekennzeichnet, daß die dezentrale Einrichtung den Burst nach lediglich einer Grobverzögerungszeit von einer oder mehreren ganzen Systemtaktperioden bereits vor dem für eine gewünschte Empfangsphasenlage des Bursts in der Vermittlungsstelle erforderlichen Sendezeitpunkt aussendet und daß erst die Vermittlungsstelle zentral eine jeweils einrichtungsindividuell bemessene Feinverzögerung der bei ihr ankommenden Bursts in die gewünschte Empfangsphasenlage vornimmt.

Die Erfindung bringt den Vorteil mit sich, die an die dezentral bewirkte Grobverzögerung anschliessende Feinverzögerung ohne den entsprechenden dezentralen Schaltungsaufwand lediglich mit Hilfe einer - zweckmässigerweise mit einer einstellbaren Verzögerungsleitung realisierten - zentralen Feinverzögerungseinrichtung zu ermöglichen, deren Verzögerungszeit nach Maßgabe der in der Vermittlungsstelle für jede dezentrale Einrichtung bestimmten und gespeicherten, aus der jeweiligen Schleifenlaufzeit resultierenden Empfangsphasenlage jeweils einrichtungsindividuell, d.h. für jeden von einer dezentralen Einrichtung her ankommenden Burst von neuem, eingestellt wird.
Die Vermittlungsstelle kann dazu in weiterer Ausgestaltung der sowohl in einem STM(Synchronous Transfer Mode)-Telekommunikationssystem als auch in einem ATM(Asynchronous Transfer Mode)-Telekommunikationssystem anwendbaren Erfindung (lichtwellenleiter-)eingangsseitig mit einer von einem Verzögerungszeitspeicher mit den einzelnen dezentralen Einrichtungen zugeordneten Speicherplätzen her jeweils beim Empfang eines von einer dezentralen Einrichtung ausgesendeten Bursts nach Maßgabe der für diese dezentrale Einrichtung gerade erforderlichen Feinverzögerungszeit eingestellten Verzögerungseinrichtung versehen sein.

Dabei können - bei in einem kontinuierlichen TDM-Burststrom vor sich gehender Signalübertragung von der Vermittlungsstelle aus zu den dezentralen Einrichtungen hin und in für die einzelnen dezentralen Einrichtungen reservierten TDMA-Zeitkanälen vor sich gehender Signalübertragung von den dezentralen Einrichtungen aus zur Vermittlungsstelle hin - zyklisch mit einer der mit der jeweiligen Grobverzögerungszeit erreichten Schleifenlaufzeit entsprechenden zeitlichen Versetzung gegenüber dem TDM-Burststrom die den einzelnen dezentralen Einrichtungen zugeordneten Speicherplätze des Verzögerungszeitspeichers ausgelesen werden und nach Maßgabe der jeweils gespeicherten Feinverzögerungszeit-Information die Verzögerungseinrichtung eingestellt wird; bei in einem ATM-Zellenstrom, aus dem jede dezentrale Einrichtung nur die für sie bestimmten ATM-Zellen aufnimmt, vor sich gehender Signalübertragung von der Vermittlungsstelle aus zu den dezentralen Einrichtungen hin und in einem TDMA-Verfahren, demzufolge eine dezentrale Einrichtung jeweils nur nach vorheriger Aufnahme einer ATM-Zelle ihrerseits eine ATM-Zelle nach der einrichtungsindividuell bemessenen Grobverzögerungszeit auszusenden vermag, vor sich gehender Signalübertragung von den dezentralen Einrichtungen aus zur Vermittlungsstelle hin bewirkt zweckmäßigerweise das Aussenden einer an eine bestimmte dezentrale Einrichtung adressierten ATM-Zelle nach der mit der jeweiligen Grobverzögerungszeit erreichten Schleifenlaufzeit das Auslesen des dieser dezentralen Einrichtung zugeordneten Speicherplatzes des Verzögerungszeitspeichers und die Einstellung der Verzögerungseinrichtung nach Maßgabe der gespeicherten Feinverzögerungszeit-Information.

Weitere Besonderheiten der Erfindung werden aus der nachfolgenden näheren Erläuterung der Erfindung anhand der Zeichnung ersichtlich.

In der Zeichnung ist schematisch in einem zum Verständnis der Erfindung erforderlichen Umfang ein bidirektionales LWL-Telekommunikationssystem mit einem passiven (vorzugsweise Monomode-) LWL- Busnetz BPON dargestellt, das sich zwischen einer zentralen Telekommunikationsstelle, für die hier eine Vermittlungsstelle VSt steht, und einer Mehrzahl von dezentralen Telekommunikationseinrichtungen, für die hier sog. Distant Units ..., DU2, DU3,... stehen, erstreckt.
Solche Distant Units können z.B., wie dies auch in der Zeichnung angedeutet ist, mit einem elektrooptischen/optoelektrischen Wandler o|e und einem auf dessen elektrischer Seite liegenden Multiplexer/Demultiplexer Muldex, mit dessen Hilfe die Distant Unit ggf. bis zu 32 ISDN-B-Kanäle zusammenfassen bzw. aufspliten möge, versehene Interface-Einrichtungen sein.
In diesem LWL-Telekommunikationssystem sind die Distant Units ..., DU2, DU3, ... über einen einfaserigen LWL-Bus OB mit einem gemeinsamen LWL-Multiplexanschluß der Vermittlungsstelle VSt verbunden; die einrichtungsindividuellen LWL-Anschlußleitungen OALl ...OALn mögen dabei über - z.B. in Kabelverzweigergehäusen untergebrachte - passive, d.h. nicht wellenlängenselektive, optische Verzweiger V1,...Vn mit dem zugehörigen LWL-Bus OB verbunden sein, und zwar entweder direkt, wie in der Zeichnung explizit dargestellt, oder auch über weitere derartige Verzweiger. Als optische Verzweiger können dabei beispielsweise Durchgangsmischer oder optische Richtkoppler Anwendung finden. Es ist auch möglich, für eine Mehrzahl von einrichtungsindividuellen LWL-Anschlußleitungen einen gemeinsamen optischen Verzweiger vorzusehen, wie dies an sich (z.B. aus EP-A2-0 171 080) bekannt ist und daher hier nicht näher dargestellt zu werden braucht.

In dem in der Zeichnung skizzierten Telekommunikationssystem ist zur Richtungstrennung ein Wellenlängengetrenntlagebetrieb (bidirektionaler Wellenlängenmultiplex) vorgesehen, indem zur Signalübertragung in Abwärtsrichtung von der zentralen Telekommunikationsstelle VSt zu den dezentralen Telekommunikationsstellen ...,DU2, DU3, ... hin Licht einer beispielsweise im 1300-nm-Band liegenden ersten Wellenlänge λ1 und zur Signalübertragung in Aufwärtsrichtung von den dezentralen Telekommunikationsstellen ..,DU2,DU3,.. zu der zentralen Telekommunikationsstelle VSt hin Licht einer etwas größeren, beispielsweise im 1500-nm-Band liegenden zweiten Wellenlänge λ2 verwendet wird. Hierzu sind in der die zentrale Telekommunikationsstelle bildenden Vermittlungsstelle VSt ein entsprechender, zweckmäßigerweise durch eine Laserdiode gebildeter elektrooptischer Wandler e/o und ein entsprechender, zweckmäßigerweise durch eine Avalanche-Photodiode gebildeter optoelektrischer Wandler e\o vorgesehen, die mit dem zugehörigen LWL-Bus OB über ein wellenlängenselektives optisches Filter F, beispielsweise einen (z.B. aus US-A-4 790 616) bekannten, mit einem Interferenz-Strahlteiler versehenen optischen Weichenbaustein, verbunden sind.
In entsprechender Weise mögen, wie dies auch in der Zeichnung angedeutet ist, die dezentralen Telekommunikationsstellen, nämlich die Distant Units ..., DU2, DU3, ..., mit elektrooptischen/ optoelektrischen Wandlern o|e versehen sein.

In dem skizzierten Telekommunikationssystem geht, wie dies auch in der Zeichnung angedeutet ist, die Signalübertragung von der Vermittlungsstelle VSt aus abwärts zu den dezentralen Einrichtungen ..., DU2, DU3,... hin in einem Burststrom Z_{down}, beispielsweise einem ATM-Zellenstrom, vor sich. Solche (jeweils 53 Bit-Oktetts umfassenden) ATM-Zellen bestehen jeweils aus einem (5-Oktett-)Steuerinformationsfeld (Header) und einem (48 Oktetts umfassenden) Nutzinformationsfeld. Teil des Headers ist der (16 Bits umfassende) sog. Virtual Path Identifier; ein anderer Teil des Headers ist das sog. Access Control Field. In den ATM-Zellenstrom Z_{down} können, wenn gerade keine Nutzinformation zu übertragen ist, Synchronisierzellen mit vorgegebenem Bitmuster zur Synchronisation der dezentralen Einrichtungen auf den jeweiligen Zellenanfang eingeblendet sein (sog. pure ATM); es ist aber auch möglich, daß der ATM-Zellenstrom Z_{down} seinerseits in eine (z.B. SONET-)Zeitrahmenstruktur mit in bestimmten festen Abständen auftretenden Synchronisiersignalen (Overhead) eingebettet ist (sog. frame structured ATM). Aus dem Burststrom (ATM-Zellenstrom) Z_{down} entnimmt jede dezentralen Einrichtung DU nur die für sie bestimmten Bursts, im Beispiel also diejenigen ATM-Zellen, die in ihrem Header, vorzugsweise in dessen Virtual Path Identifier, mit einer eben dieser dezentralen Einrichtung DU zugeordneten Kennzeichnung adressiert sind. In der Zeichnung ist für vier ATM-Zellen eines ATM-Zellenstroms Z_{down} die Unterteilung in Header und Nutzinformationsfeld verdeutlicht, wobei mit den in den Headern dieser vier ATM-Zellen angegebenen Kennzeichnungen (3, 3, 2,n) angedeutet wird, daß die - Nutzinformationen A und B tragenden - ersten beiden Zellen für die dezentrale Einrichtung DU3 bestimmt sind, daß die - eine Nutzinformation C tragende - dritte Zelle für die dezentrale Einrichtung DU2 bestimmt ist und daß die - eine Nutzinformation D tragende - vierte Zelle für eine in der Zeichnung nicht mehr dargestellte, über die LWL-Teilnehmeranschlußleitung OALn erreichte dezentrale Einrichtung bestimmt ist.

In der umgekehrten Übertragungsrichtung geht die Signalübertragung von den dezentralen Einrichtungen |Distant Units| DU aufwärts zur Vermittlungsstelle VSt hin in einem TDMA-Verfahren mit Bursts (ggf. ATM-Zellen) Zᵤₚ vor sich, demzufolge eine dezentrale Einrichtung DU jeden Burst mit Hilfe einer von der Vermittlungsstelle VSt her DU-individuell eingestellten Verzögerungseinrichtung synchronisiert aussendet, so daß in Aufwärtsrichtung jeder Burst in einem für die betreffende dezentrale Einrichtung DU reservierten Zeitschlitz (Zeitfach) übertragen wird. Dabei kommt es für eine sichere Burstaufnahme durch die zentrale Telekommunikationseinrichtung VSt darauf an, daß die den Aufwärts-Burststrom Zᵤₚ bildenden Bursts nicht nur überhaupt im jeweils reservierten Zeitfach übertragen werden, sondern daß sie innerhalb dieses Zeitfachs auch mit einer gewünschten optimalen Empfangsphasenlage von der zentralen Einrichtung VSt aufgenommen werden können.

Dies kann durch eine entsprechend fein abgestimmte Verzögerungszeitspanne zwischen der Aufnahme eines für eine dezentrale Einrichtung DU bestimmten Bursts aus dem Abwärts-Burststrom Z_{down} durch diese dezentrale Einrichtung DU und dem nachfolgenden Aussenden eines Aufwärts-Bursts durch eben diese dezentrale Einrichtung DU erreicht werden oder aber, wie dies auch in der Zeichnung angedeutet ist, dadurch, daß die dezentrale Einrichtung DU den Burst nach lediglich einer Grobverzögerungszeit von einer oder mehreren ganzen Systemtaktperioden bereits vor dem für eine gewünschte Empfangsphasenlage des Bursts in der Vermittlungsstelle VSt erforderlichen Sendezeitpunkt aussendet und daß erst die vermittlungsstelle VSt zentral eine jeweils DU-individuell bemessene Feinverzögerung der bei ihr ankommenden Bursts in die gewünschte Empfangsphasenlage vornimmt.
In der Zeichnung ist dazu angedeutet, daß die dezentralen Einrichtungen ..., DU2, DU3,... jeweils mit einer zum elektrooptischen Wandler o|e führenden Grobverzögerungsschaltung GV versehen sind, die eine Burstverzögerung um ganzzahlige Vielfache der Systemtaktperiode ermöglichen möge, und daß die zentrale Einrichtung (Vermittlungsstelle) VSt eingangsseitig mit einer ihrem optoelektrischen Wandler e\o nachgeschalteten einstellbaren Feinverzögerungseinrichtung FV versehen ist, die von einem Verzögerungszeitspeicher FZ mit den einzelnen dezentralen Einrichtungen ...,DU2, DU3,... zugeordneten Speicherplätzen her über eine zentrale Ansteuereinrichtung (CONTROL) CC jeweils beim Empfang eines von einer dezentralen Einrichtung DU ausgesendeten Bursts nach Maßgabe der für diese dezentrale Einrichtung DU gerade erforderlichen Feinverzögerungszeit von Bruchteilen einer Systemtaktperiode einstellbar ist. Die für eine bestimmte dezentrale Einrichtung DU erforderliche Feinverzögerungszeit kann dabei bei (erstmaliger oder auch Wieder-)Inbetriebnahme der dezentralen Einrichtung DU oder auch von Zeit zu Zeit wiederholt durch eine zentrale Auswerteeinrichtung (TDMA LOGIC) CL in einer der eingangs erwähnten bekannten Bestimmung der Schleifenlaufzeit bzw. der nach Maßgabe der Schleifenlaufzeit erforderlichen Verzögerungszeit entsprechenden Weise ermittelt und in den Verzögerungszeitspeicher FZ eingeschrieben worden sein. Als Feinverzögerungseinrichtung FV kann beispielsweise eine mit entsprechenden steuerbaren Abgriffen versehene Verzögerungsleitung vorgesehen sein, bei der, vom Verzögerungszeitspeicher FZ her gesteuert, jeweils der der jeweils erforderlichen Feinverzögerungszeit entsprechende Abgriff entriegelt wird.

Dies kann - bei in einem ATM-Zellenstrom, aus dem jede dezentrale Einrichtung DU nur die für sie bestimmten ATM-Zellen aufnimmt, vor sich gehender Abwärts-Signalübertragung von der Vermittlungsstelle VSt aus zu den dezentralen Einrichtungen DU hin und in einem TDMA-Verfahren, demzufolge eine dezentrale Einrichtung DU jeweils nur nach vorheriger Aufnahme einer ATM-Zelle ihrerseits eine ATM-Zelle nach der einrichtungsindividuell bemessenen Grobverzögerungszeit auszusenden vermag, vor sich gehender Aufwärts-Signalübertragung von den dezentralen Einrichtungen DU aus zur Vermittlungsstelle VSt hin - in der Weise geschehen, daß das Aussenden einer an eine bestimmte dezentrale Einrichtung DU adressierten ATM-Zelle nach der mit der jeweiligen Grobverzögerungszeit erreichten Schleifenlaufzeit das Auslesen des dieser dezentralen Einrichtung DU zugeordneten Speicherplatzes des Verzögerungszeitspeichers FZ und die Einstellung der Verzögerungseinrichtung FV nach Maßgabe der gespeicherten Feinverzögerungszeit-Information bewirkt.
Bei in einem kontinuierlichen TDM-Burststrom vor sich gehender Abwärts-Signalübertragung von der Vermittlungsstelle VSt aus zu den dezentralen Einrichtungen DU hin und in für die einzelnen dezentralen Einrichtungen DU reservierten TDMA-Zeitkanälen vor sich gehender Aufwärts-Signalübertragung von den dezentralen Einrichtungen DU aus zur Vermittlungsstelle VSt hin können die den einzelnen dezentralen Einrichtungen DU zugeordneten Speicherplätze des Verzögerungszeitspeichers FZ zyklisch mit einer der mit der jeweiligen Grobverzögerungszeit erreichten Schleifenlaufzeit entsprechenden zeitlichen Versetzung gegenüber dem TDM-Burststrom ausgelesen werden, wobei nach Maßgabe der jeweils gespeicherten Feinverzögerungszeit-Information die Verzögerungseinrichtung FV eingestellt wird.

Die jeweils DU-individuell vorgesehene Grobverzögerungsschaltung GV, die beispielsweise mit einem digitalen Verzögerungsglied in Form eines system(-bit-)taktgesteuerten Schieberegisters realisiert sein kann, wird nach Maßgabe der bei der betreffenden dezentralen Einrichtung DU erforderlichen Grobverzögerungszeit von einer dem optoelektrischen Wandler o|e nachgeschalteten dezentralen Auswerteeinrichtung DL her über eine dezentrale Ansteuereinrichtung DC eingestellt, so daß die dezentrale Einrichtung DU in dem für sie reservierten Zeitschlitz (Zeitfach) sendet. Diese Einstellung kann in einer der eingangs erwähnten bekannten Einstellung einer programmierbaren digitalen Verzögerungseinrichtung entsprechenden Weise vor sich gehen und braucht daher hier nicht weiter erläutert zu werden.
Es sei jedoch noch bemerkt, daß Grobverzögerungszeit und Feinverzögerungszeit für jede dezentrale Einrichtung DU bei deren (erstmaliger oder auch Wieder-)Inbetriebnahme individuell bemessen werden kann: Hierzu kann die Vermittlungsstelle VSt ggf. eine nach Maßgabe der maximalen Laufzeit vorgegebene Anzahl von unmittelbar aufeinanderfolgenden, im Header an die betreffende dezentrale Einrichtung DU adressierten ATM-Zellen aussenden, deren Nutzinformationstyp im Header als Maintenance Information gekennzeichnet ist.
Die zu initialisierende dezentrale Einrichtung DU antwortet nach Empfang dieser (Maintenance-)ATM-Zellen ohne Verzögerung ebenfalls mit (Maintenance-)ATM-Zellen, deren Nutzinformationstyp im Header als Maintenance Information gekennzeichnet ist. Aus der zwischen Senden und Empfang von (Maintenance-)ATM-Zellen liegenden Zeit bestimmt die Vermittlungsstelle VSt dann die zur Erzielung der vorgegebenen Schleifenlaufzeit erforderliche Grobverzögerungszeit der betreffenden dezentralen Einrichtung DU und danach die erforderliche Feinverzögerungszeit.
Da beim Initialisieren einer dezentralen Einrichtung DU der nutzinformationtragende ATM-Zellenstrom für eine gewisse Zeit - bei einer maximalen Schleifenlaufzeit von z.B. 100 µs und einer Summenbitrate von 150 Mbit/s auf dem LWL-Bus OB z.B. für ca. 40 ATM-Zellen - unterbrochen wird, ist in dieser Zeit die zur Übertragung anfallende Nutzinformation in entsprechenden Zellenpuffern zwischenzuspeichern, die dann nach Beendigung des Einphasvorgangs wieder geleert werden können.

Während des Betriebes kann die Vermittlungsstelle VSt die zwischen den empfangenen ATM-Zellen Zᵤₚ auftretenden Zeitlücken auf die Einhaltung vorgegebener Grenzen überwachen und bei deren Über- bzw. Unterschreiten die betreffende DU-individuelle Verzögerungszeit entsprechend modifizieren, so daß die Zeitlücken durch DU-individuelles Nachregeln der Verzögerungszeit wieder auf den Sollwert gebracht werden können; hierzu kann die Vermittlungsstelle VSt der betreffenden dezentralen Einrichtung DU ggf. eine entsprechende Nachstellinformation im Access Control Field der an diese dezentrale Einrichtung DU adressierten Nutzinformation tragenden ATM-Zellen Z_{down} übermitteln bzw. in ihrem eigenen Verzögerungszeitspeicher FZ die für die betreffende dezentrale Einrichtung DU gespeicherte Feinverzögerungszeit entsprechend korrigieren.

Abschließend sei die Erfindung noch einmal zusammenfassend wie folgt dargestellt.

Bei der TDM/TDMA-Übertragung sendet die zentrale Einrichtung (Vermittlungsstelle) VSt kontinuierlich Datenbursts für alle angeschlossenen dezentralen Einrichtungen (Distant Units) DU. Jede dezentrale Einrichtung DU extrahiert den für sie bestimmten Datenburst und sendet einen Datenburst an die Zentrale zurück. Dieser Datenburst wird in einem für die jeweilige dezentrale Einrichtung DU reservierten Zeitschlitz gesendet.
In der zentralen Einrichtung VSt werden die ankommenden Datenbursts übernommen und weiterverarbeitet. Dabei haben die ankommenden Daten haben zunächst zwar die gleiche Frequenz entsprechend der Systemtaktfrequenz der zentralen Einrichtung VSt; wegen der unterschiedlichen Laufzeiten auf der Übertragungsstrecke zu bzw. von den einzelnen Distant Units (aufgrund der unterschiedlichen Längen des jeweiligen Glasfaserwegs) haben die einzelnen Datenpakete jedoch unterschiedliche Phasenlage, wenn sie in der Vermittlungsstelle VSt eintreffen.
Ausgeglichen werden sollen die unterschiedliche Laufzeit, damit die Daten in den ihnen zugewiesenen Zeitschlitz fallen, und die jeweilige Phase: Damit die ankommenden Daten ohne Übernahmefehler abgetastet werden können, ist es notwendig, sie in der Datenmitte zu übernehmen.

Zur Lösung des Problems ist es bekannt, daß in der Distant Unit sowohl ein Grob- als auch ein Feinshift implementiert ist (Br. Telcom Technolog. J. a.a.O., S. 100 und 108). Grobshift bedeutet, daß die Sendedaten mit dem DU-internen Systemtakt bis in die Nähe der Sollsendelage verzögert werden. Mit dem Feinshift werden die Sendedaten um n-tel Taktschritte verzögert (z.B. mit analogen Verzögerungsleitungen), so daß die Phasenlage der DU-Sendedaten in der zentralen Einrichtung VSt phasenrichtig zum VSt-Systemtakt steht und diese übernommen werden können.

Der Grobshift, demzufolge der Datenburst um ganzzahlige Vielfache des Taktes verzögert wird (z.B. mit einem digitalen Verzögerungsglied realisiert), wird über eine CONTROL-Logic so eingestellt, daß die Distant Unit in dem für sie reservierten Zeitschlitz sendet. Den anschließenden Feinshift bewirkt z.B. eine einstellbare analoge Verzögerungsleitung, die in jeder Distant Unit vorhanden ist.

Eine demgegenüber technisch günstigere Lösung bringt die Erfindung mit dem Verzicht auf eine Feinverzögerung in jeder Distant Unit DU und der Vornahme einer jeweils DU-individuell bemessenen Feinverzögerung der in der zentralen Einrichtung VSt ankommenden Datenbursts durch eine dort vorgesehene zentrale Feinverzögerungseinrichtung: Für jede Distant Unit DU wird zunächst einmal die zugehörige Phasenlage der von dort ankommenden Bursts bestimmt und in einem Speicher festgehalten, und danach wird nach Maßgabe dieser Phasenlage jeweils bei Eintreffen eines Datenbursts die entsprechende Feinverzögerung mittels der CONTROL-Logic eingestellt. Die ankommenden Daten werden also um n-tel Systemtakte verzögert und stehen dann in optimaler Phasenlage zu Übernahme an. Mit dieser zentralen Phasenfeineinstellung wird nur eine einzige eihstellbare Feinverzögerungsleitung für alle angeschlossenen Distant Units benötigt.

## Patentansprüche

1. Passives optisches Telekommunikationssystem, in dem jeweils eine Mehrzahl von dezentralen Einrichtungen |Distant Units| (DU) jeweils über eine eigene Lichtwellenleiter-Anschlußleitung (OAL1), ...,OALn) mit einem optischen Verzweiger (V1...Vn) verbunden ist, der direkt oder über wenigstens einen weiteren optischen Verzweiger mit einem gemeinsamen Lichtwellenleiteranschluß der Vermittlungsstelle (VSt) über einen Lichtwellenleiter-Bus (OB) verbunden ist,
wobei die Signalübertragung von der Vermittlungsstelle (VSt) aus zu den dezentralen Einrichtungen (DU) hin in einem Burststrom (Z_{down}) vor sich geht, aus dem jede dezentrale Einrichtung (DU) nur die für ebendiese dezentrale Einrichtung (DU) bestimmten Bursts aufnimmt, und
wobei die Signalübertragung von den dezentralen Einrichtungen aus zur Vermittlungsstelle (VSt) hin in einem TDMA-Verfahren vor sich geht, demzufolge eine dezentrale Einrichtung (DU) jeden Burst mit Hilfe einer von der Vermittlungsstelle her einrichtungsindividuell eingestellten Verzögerungseinrichtung sychronisiert aussendet,
**dadurch gekennzeichnet,**
daß die dezentrale Einrichtung (DU) den Burst nach lediglich einer Grobverzögerungszeit von einer oder mehreren ganzen Systemtaktperioden bereits vor dem für eine gewünschte Empfangsphasenlage des Bursts in der Vermittlungsstelle (VSt) erforderlichen Sendezeitpunkt aussendet
und daß erst die Vermittlungsstelle (VSt) zentral eine jeweils einrichtungsindividuell bemessene Feinverzögerung der bei ihr ankommenden Bursts in die gewünschte Empfangsphasenlage vornimmt.

2. Telekommunikationssystem nach Anspruch 1,
**dadurch gekennzeichnet,**
daß die Vermittlungsstelle (VSt) (lichtwellenleiter-)eingangsseitig mit einer von einem Verzögerungszeitspeicher (FZ) mit den einzelnen dezentralen Einrichtungen (DU) zugeordneten Speicherplätzen her jeweils beim Empfang eines von einer dezentralen Einrichtung (DU) ausgesendeten Bursts nach Maßgabe der für diese dezentrale Einrichtung (DU) gerade erforderlichen Feinverzögerungszeit eingestellten Verzögerungseinrichtung (FV) versehen ist.

3. Telekommunikationssystem nach Anspruch 2,
**dadurch gekennzeichnet,**
daß - bei in einem kontinuierlichen TDM-Burststrom vor sich gehender Signalübertragung von der Vermittlungsstelle (VSt) aus zu den dezentralen Einrichtungen (DU) hin und in für die einzelnen dezentralen Einrichtungen (DU) reservierten TDMA-Zeitkanälen vor sich gehender Signalübertragung von den dezentralen Einrichtungen (DU) aus zur Vermittlungsstelle (VSt) hin - zyklisch mit einer der mit der jeweiligen Grobverzögerungszeit erreichten Schleifenlaufzeit entsprechenden zeitlichen Versetzung gegenüber dem TDM-Burststrom die den einzelnen dezentralen Einrichtungen (DU) zugeordneten Speicherplätze des Verzögerungszeitspeichers (FZ) ausgelesen werden und nach Maßgabe der jeweils gespeicherten Feinverzögerungszeit-Information die Verzögerungseinrichtung (FV) eingestellt wird.

4. Telekommunikationssystem nach Anspruch 2,
**dadurch gekennzeichnet,**
daß - bei in einem ATM-Zellenstrom, aus dem jede dezentrale Einrichtung (DU) nur die für sie bestimmten ATM-Zellen aufnimmt, vor sich gehender Signalübertragung von der Vermittlungsstelle (VSt) aus zu den dezentralen Einrichtungen (DU) hin und in einem TDMA-Verfahren, demzufolge eine dezentrale Einrichtung (DU) jeweils nur nach vorheriger Aufnahme einer ATM-Zelle ihrerseits eine ATM-Zelle nach der einrichtungsindividuell bemessenen Grobverzögerungszeit auszusenden vermag, vor sich gehender Signalübertragung von den dezentralen Einrichtungen (DU) aus zur Vermittlungsstelle (VSt) hin - das Aussenden einer an eine bestimmte dezentrale Einrichtung (DU) adressierten ATM-Zelle nach der mit der jeweiligen Grobverzögerungszeit erreichten Schleifenlaufzeit das Auslesen des dieser dezentralen Einrichtung (DU) zugeordneten Speicherplatzes des Verzögerungszeitspeichers (FZ) und die Einstellung der Verzögerungseinrichtung (FV) nach Maßgabe der gespeicherten Feinverzögerungszeit-Information bewirkt.

5. Telekommunikationssystem nach einem der Ansprüche 2 bis 4,
**dadurch gekennzeichnet,**
daß als Verzögerungseinrichtung (FV) eine mit verzögerungszeitspeichergesteuerten Abgriffen versehene Verzögerungsleitung vorgesehen ist.

6. Telekommunikationssystem nach einem der Ansprüche 1 bis 5,
**dadurch gekennzeichnet,**
daß die dezentralen Einrichtungen (DU) (lichtwellenleiter-)ausgangsseitig jeweils mit einer nach Maßgabe der erforderlichen Grobverzögerungszeit eingestellten systemtaktgesteuerten Verzögerungsschaltung (GV) versehen sind.

## Claims

1. Passive optical telecommunications system, in which in each instance a plurality of distant units (DU) is connected in each instance via a specifically associated optical waveguide line (OAL1,...,OALn) to an optical brancher (V1...Vn), which is connected directly or via at least one further optical brancher to a common optical waveguide terminal of the switching centre (VSt) via an optical waveguide bus (OB),
in which the signal transmission from the switching centre (VSt) towards the distant units (DU) proceeds in a burst stream (Z_{down}), from which each distant unit (DU) receives only the bursts intended for just that distant unit (DU), and
in which the signal transmission from the distant units towards the switching centre (VSt) proceeds in a TDMA method, according to which a distant unit (DU) transmits each burst in synchronized fashion with the aid of a delay unit which is individually set for the particular unit from the switching centre,
characterized in that
the distant unit (DU) transmits the burst after only a rough delay time of one or more whole system clock periods already before the transmission instant required for a desired reception phase relation of the burst in the switching centre (VSt)
and in that only the switching centre (VSt) centrally undertakes a fine delay, dimensioned in each instance individually for the particular unit, of the bursts arriving at it to produce the desired reception phase relation.

2. Telecommunications system according to Claim 1, characterized in that the switching centre (VSt) is provided on the (optical waveguide) input side with a delay unit (FV) which is set from a delay time memory (FZ) with memory locations associated with the individual distant units (DU) in each instance on reception of a burst transmitted by a distant unit (DU) according to the fine delay time specifically required for this distant unit (DU).

3. Telecommunications system according to Claim 2, characterized in that - in the case of signal transmission proceeding in a continuous TDM burst stream from the switching centre (VSt) towards the distant units (DU) and signal transmission proceeding in TDMA time channels reserved for the individual distant units (DU) from the distant units (DU) towards the switching centre (VSt) - cyclically with a time shift corresponding to the loop transit time achieved with the respective rough delay time, in relation to the TDM burst stream, the memory locations of the delay time memory (FZ) which are associated with the individual distant units (DU) are read out and the delay unit (FV) is set according to the respectively stored fine delay time information.

4. Telecommunications system according to Claim 2, characterized in that - in the case of signal transmission proceeding in an ATM cell stream, from which each distant unit (DU) receives only the ATM cells intended for it, from the switching centre (VSt) towards the distant units (DU) and signal transmission proceeding in a TDMA method, according to which a distant unit (DU) is able in each instance only after prior reception of an ATM cell on its part, to transmit an ATM cell after the rough delay time which is dimensioned individually for the particular unit, from the distant units (DU) towards the switching centre (VSt) - the transmission of an ATM cell addressed to a specified distant unit (DU) after the loop transit time achieved with the respective rough delay time effects the readout of that memory location of the delay time memory (FZ) which is associated with this distant unit (DU) and the setting of the delay unit (FV) according to the stored fine delay time information.

5. Telecommunications system according to one of Claims 2 to 4, characterized in that a delay line provided with taps which are controlled by the delay time memory is provided as delay unit (FV).

6. Telecommunications system according to one of Claims 1 to 5, characterized in that the distant units (DU) are provided, on the (optical waveguide) output side, in each instance with a system-clock-controlled delay circuit (GV) which is set according to the required rough delay time.

## Revendications

1. Système de télécommunication optique passif, dans lequel un certain nombre de dispositifs distants |Distant Units| (DU) sont respectivement reliés, par l'intermédiaire d'une ligne de raccordement à fibres optiques (OAL1, ..., OALn), qui leur est propre, à un coupleur optique (V1 ... Vn) qui est relié, directement ou par au moins un autre coupleur, à un raccordement de fibres optiques commun d'un central de communication (VSt) par l'intermédiaire d'un bus (OB) à fibres optiques,
la transmission de signal du central de communication (VSt) vers les dispositifs distants (DU) s'effectuant par un flux de paquets (Zdown), dans lequel chaque dispositif distant (DU) prend seulement les paquets destinés à ce même dispositif distant (DU), et
la transmission du signal des dispositifs distants vers le central de communication (VSt) s'effectuant selon un procédé AMRT par lequel un dispositif distant (DU) émet de manière synchronisée chaque paquet à l'aide d'un dispositif de temporisation réglé pour chaque dispositif distant à partir du central de communication,
caractérisé en ce que,
le dispositif distant (DU) émet le paquet après simplement une durée de temporisation approximative d'une ou plusieurs périodes entières d'horloge du système avant même l'instant d'émission requis pour une relation des phases de réception souhaitée du paquet dans le central de communication (VSt)
et le central de communication (VSt) procède de façon centrale d'abord à une temporisation précise, respectivement proportionnée à chaque dispositif distant, du paquet lui arrivant, selon la relation des phases de réception souhaitée.

2. Système de télécommunication selon la revendication 1,
caractérisé en ce que,
le central de communication (VSt) est muni, du côté de l'entrée (de la liaison à fibres optiques), d'un dispositif de temporisation (FV), réglé à partir d'une mémoire de durée de temporisation (FZ) comportant des emplacements de mémoire attribués aux différents dispositifs distants (DU), à chaque réception d'un paquet émis par un dispositif distant (DU), selon la durée de temporisation précise justement requise pour ce dispositif distant (DU).

3. Système de télécommunication selon la revendication 2,
caractérisé en ce que,
- lors d'une transmission de signal s'effectuant dans un flux de paquets MRT continu à partir du central de communication (VSt) vers les dispositifs distants (DU), et lors d'une transmission de signal s'effectuant dans des canaux de temps AMRT réservés pour les divers dispositifs distants (DU) à partir des dispositifs distants (DU) vers le central de communication (VSt) - les emplacements de mémoire, attribués aux divers dispositifs distants (DU), de la mémoire de durée de temporisation (FZ), sont lus de manière cyclique avec un décalage dans le temps, par rapport au flux de paquets MRT, correspondant à la durée, de parcours de la boucle, obtenue avec la durée de temporisation approximative considéré, et le dispositif de temporisation (FV) est réglé selon l'information de durée de temporisation précise mémorisée respectivement.

4. Système de télécommunication selon la revendication 2,
caractérisé en ce que,
- lors d'une transmission de signal s'effectuant dans un flux de cellules MRT, dans lequel chaque dispositif distant (DU) ne prend que les cellules ATM qui lui sont destinées, à partir du central de communication (VSt) vers les dispositifs distants (DU), et lors d'une transmission du signal s'effectuant suivant un procédé AMRT, par lequel un dispositif distant (DU) ne peut émettre respectivement de son côté une cellule MRT selon la durée de temporisation approximative proportionnée à chaque dispositif distant, qu'après réception au préalable d'une cellule MRT, à partir des dispositifs distants (DU) vers le central de communication (VSt) - I'émission d'une cellule MRT adressée à un dispositif distant (DU) déterminé, après la durée de parcours de la boucle obtenue avec la durée de temporisation approximative respective provoque la lecture de l'emplacement de mémoire, attribué à ce dispositif distant (DU), de la mémoire de durée de temporisation (FZ) et le réglage du dispositif de temporisation (FV) selon l'information de durée de temporisation précise mémorisée.

5. Système de télécommunication selon l'une des revendications 2 à 4,
caractérisé en ce que,
une ligne de temporisation munie de bornes commandées par la mémoire de durée de temporisation est prévue comme dispositif de temporisation (FV).

6. Système de télécommunication selon une des revendications 1 à 5,
caractérisé en ce que,
les dispositifs distants (DU) sont munis du côté de la sortie (de la liaison à fibres optiques) chacun d'un circuit de temporisation (GV) commandé par l'horloge du système et réglé selon la durée de temporisation approximative requise.
